# DEMANDE DE BREVET EUROPEEN

(11) **EP 3 118 357 A1**
(43) Date de publication de la demande: **18.01.2017**
(21) Numéro de dépôt: 16179353.4
(22) Date de dépôt: 13.07.2016
(51) Int. Cl.: D03D 1/00, D03D 15/02, D03D 13/00, A01K 61/00

(54) **PROCEDE ET MACHINE DE FABRICATION D'UNE STRUCTURE TISSEE**

(30) Priorité: 13.07.2015 FR 1556657
(71) Demandeur: Ets A. Deschamps Et Fils, 16400 La Couronne (FR)
(72) Inventeur: DESCHAMPS, Georges-Paul, 16400 VOEUIL ET GIGET (FR)
(74) Mandataire: Cabinet Plasseraud

(57) **Abrégé**

L'invention concerne un procédé de fabrication d'une structure tissée comportant au moins une paroi tissée, dans lequel on réalise les étapes suivantes :
a) tisser au moins une première portion de ladite structure tissée, ladite première portion comportant des fils de chaîne et des fils de trame entrecroisés selon l'armure fondamentale de chaque partie de paroi tissée correspondant à cette première portion,
b) stopper l'introduction des fils de trame après insertion d'un fil de trame associé au positionnement d'au moins un élément allongé dans ladite structure tissée, ce fil de trame étant entrecroisé avec les fils de chaîne de chaque partie de paroi tissée selon l'armure fondamentale de ladite partie de paroi,
c) ledit au moins un élément allongé ayant un axe principal, introduire chaque élément allongé entre les fils de chaîne définissant avec ledit fil de trame associé, la position d'insertion de cet élément allongé dans la structure tissée, l'axe principal dudit élément allongé coupant le plan passant par les fils de chaîne de chaque partie de paroi dans laquelle il est introduit,
d) maintenir en position chaque élément allongé et introduire au moins un nouveau fil de trame entrecroisant les fils de chaîne de ladite structure tissée selon ladite armure fondamentale de chaque partie de paroi ou selon au moins une nouvelle armure, pour reprendre la fabrication de ladite structure tissée, chaque élément allongé étant non pris dans ladite structure tissée.

## Description

### ARRIERE-PLAN DE L'INVENTION

### Domaine de l'invention

La présente invention concerne un procédé de fabrication d'une structure tissée perfectionnée telle qu'un vêtement intelligent, un filet de lanterne japonaise ou encore un conduit creux pour le transport de fluide.

Elle concerne également un métier à tisser perfectionné pour la réalisation d'une telle structure tissée.

### Arrière-plan technologique

On connaît différents dispositifs d'élevage en pleine mer de mollusques et notamment d'huîtres, lesquels sont encore appelés "lanterne Japonaise" en raison de leur ressemblance avec un tel objet.

De tels dispositifs d'élevage sont connus depuis des millénaires et leur origine se situe dans les pays à faible marnage, voire à marnage nul comme par exemple, le bassin méditerranéen ou certains pays d'Asie.

Les coquillages ne sont plus semés mais disposés sur des plateaux circulaires agencés à l'intérieur d'un filet ayant la forme générale d'un tube, ces plateaux étant régulièrement espacés dans ce filet. Un filin central permet de fixer ces plateaux en les maintenant régulièrement espacés les uns des autres.

Ce filet est donc perméable pour autoriser la circulation d'eau de mer et permettre ainsi aux coquillages de capter les particules nécessaires à leur alimentation et à leur croissance.

On laisse ainsi ces filets dans l'eau de mer afin que les coquillages prospèrent. Ces filets étant repérés, ils sont ensuite sortis de l'eau pour récupérer les coquillages.

A ce jour, ces dispositifs d'élevage comportent généralement de l'ordre de dix (10) à douze (12) plateaux ajourés et reliés entre eux par des bouts, l'ensemble étant reçu dans un filet ayant la forme d'un tube qui confine les coquillages.

Souvent un système d'ouverture/fermeture de type "velcro" permet d'ouvrir et refermer le filet sur toute sa hauteur pour permettre un accès aux plateaux en vue de leur vidage et rechargement.

Chaque dispositif d'élevage est donc retiré de l'eau et rapporté à terre pour la réalisation de ces opérations ou ces dernières sont réalisées directement à bord du bateau, ce qui nécessite un bateau de grandes dimensions pour permettre la manipulation et le travail sur chaque dispositif.

Les dispositifs d'élevage de l'état de l'art présentent de nombreux inconvénients:
- ces dispositifs étant monoblocs, il est nécessaire de les récupérer pour les amener à terre ou les entreposer sur une grande surface de pont en vue de leur traitement.
- le temps de traitement est très important car il nécessite soit un aller-retour jusqu'à terre, soit une immobilisation du bateau, toujours coûteux, pour un traitement en mer toujours plus dangereux et difficile.
- l'assemblage du filet et des plateaux qu'il vient entourer, est complexe. Il est donc fastidieux et long de libérer les plateaux de ce filet afin d'accéder aux coquillages. Il est également difficile de ne traiter qu'une partie de ces plateaux.
- le filet est de très basse qualité et est considéré comme un élément consommable, donc jetable après une ou deux utilisations sans qu'aucun processus de recyclage ne soit mis en place.

Il existe donc un besoin pressant pour un dispositif d'élevage de coquillages dont le design original autorise des opérations de vidage/rechargement facilitées, voire in situ en mer, c'est-à-dire sans retrait du dispositif d'élevage tout entier.

Il est, par ailleurs, bien connu que l'introduction d'un élément externe dans un tissu, par exemple une pointe, peut détériorer localement ce tissu, par exemple par l'apparition de fils du tissu endommagés, voire coupés.

On constate donc un affaiblissement localisé de la résistance mécanique d'un tissu après introduction d'un élément externe dans celui-ci.

Or, un tel affaiblissement peut être le point de départ de la déchirure de ce tissu dans des conditions particulières.

Par ailleurs, l'introduction en force d'un tel élément externe dans le tissu, exclut toute possibilité d'insertion d'un objet fragile dans le tissu, lequel serait alors susceptible d'être endommagé, voire détruit.

Pour améliorer le dispositif d'élevage de coquillages, et notamment son filet, la présente demanderesse, spécialiste du domaine du tissage, a donc constaté l'absence de solution dans l'état de l'art et la nécessité d'un procédé de tissage novateur.

### Objet de l'invention

La présente invention vise à pallier les inconvénients de l'art antérieur en proposant un procédé de tissage d'une structure tissée, simple dans sa conception et dans son mode opératoire, rapide et économique, autorisant une introduction facilitée d'un ou plusieurs éléments externes dans cette structure tissée sans affaiblissement de sa résistance mécanique.

Un autre objet de la présente invention est un procédé de tissage d'une structure tissée autorisant l'insertion d'objets fragiles dans une structure tissée sans détérioration de ces objets.

Encore un objet de la présente invention est un procédé de tissage d'une telle structure tissée autorisant un positionnement très précis et simple d'un objet externe dans cette structure.

La présente invention vise également un métier à tisser pour la mise en oeuvre d'un tel procédé de tissage d'une structure tissée.

La présente invention vise encore un dispositif d'élevage de coquillages, dont le filet est au moins en partie obtenu par un tel procédé de tissage, simplifiant de manière drastique les opérations de vidage/rechargement des plateaux du dispositif d'élevage.

### BREVE DESCRIPTION DE L'INVENTION

A cet effet, l'invention concerne un procédé de fabrication d'une structure tissée comportant au moins une paroi tissée, dans lequel on réalise les étapes suivantes :
a) tisser au moins une première portion de ladite structure tissée, ladite première portion comportant des fils de chaîne et des fils de trame entrecroisés selon l'armure fondamentale de chaque partie de paroi tissée correspondant à cette première portion,
b) stopper l'introduction des fils de trame après insertion d'un fil de trame associé au positionnement d'au moins un élément allongé dans ladite structure tissée, ce fil de trame étant entrecroisé avec les fils de chaîne de chaque partie de paroi tissée selon l'armure fondamentale de ladite partie de paroi,
c) ledit au moins un élément allongé ayant un axe principal, introduire chaque élément allongé entre les fils de chaîne définissant avec ledit fil de trame associé, la position d'insertion de cet élément allongé dans la structure tissée, l'axe principal dudit élément allongé coupant le plan passant par les fils de chaîne de chaque partie de paroi dans laquelle il est introduit,
d) maintenir en position chaque élément allongé et introduire au moins un nouveau fil de trame entrecroisant les fils de chaîne de ladite structure tissée selon ladite armure fondamentale de chaque partie de paroi ou selon au moins une nouvelle armure, pour reprendre la fabrication de ladite structure tissée, chaque élément allongé étant non pris dans ladite structure tissée.

Lorsque cette structure tissée comporte plusieurs parois, les parties de paroi peuvent présenter une même armure fondamentale ou au contraire des armures distinctes pour au moins certaines d'entre elles.

De manière connue, l'homme du métier sait que pour représenter, "l'armure" d'un tissu, on fait appel au procédé de mise en carte, qui utilise un papier quadrillé, et, par définition, on admet que les interlignes verticaux du quadrillage figurent les fils de chaîne, et les interlignes horizontaux, les fils de trame, ou duite du tissu.

Si sur un tel quadrillage, on veut figurer qu'un fil de chaîne évolue au-dessus d'un fil de trame, il suffit alors, par convention, de colorier la case placée à l'intersection du fil de chaîne et du fil de trame considérés. On a alors un « pris ».

L'absence de coloration d'une case, qui correspond, à un « laissé », symbolise le passage du fil de chaîne au-dessous du fil de trame correspondant.

Ce procédé de mise en carte, particulièrement simple, permet ainsi par une combinaison judicieuse de pris et de laissés, de représenter les évolutions respectives des fils de chaîne et de fils de trame d'une paroi tissée ou d'un tissu, si compliquées soient elles.

Le terme « pris » de l'étape d) du procédé devant être interprété en ce sens, il ressort clairement de la définition technique du procédé que chaque élément allongé introduit dans la structure tissée est naturellement non lié à cette structure tissée par le seul tissage de la structure tissée. Ainsi, et en l'absence d'une étape de solidarisation distincte du tissage de la structure tissée à proprement parlé, telle qu'un collage de l'élément allongé aux fils de chaîne et de trame l'entourant, chaque élément allongé peut être retiré de la structure tissée.

Bien entendu, cette opération peut être plus ou moins rendue complexe en fonction du compactage des fils de trame de la structure tissée souhaitée, lequel peut résulter en un serrage plus ou moins important de l'élément allongé.

Les parois tissées, ou nappes, de la structure tissée peuvent être identiques ou, au contraire, présenter pour au moins certaines d'entre elles, des dimensions ou formes différentes.

L'arrêt du tissage pour introduire un ou plusieurs éléments allongés dans la structure tissée est donc repéré par rapport au fil de trame directement associé à la position du ou de ces éléments allongés dans la structure tissée. Cela signifie que ce fil de trame est un des fils de la structure tissée entourant le ou les éléments allongés. Bien entendu, on répète les étapes b) à d) à chaque fois qu'un ou plusieurs nouveaux éléments allongés dont la ou les positions sont associées à un autre fil de trame de la structure tissée, sont à introduire dans cette structure tissée. Ces opérations nécessitent donc de déterminer au préalable quel est le fil de trame, ou quels sont les fils de trame, de la structure tissée associé(s) au positionnement d'un ou plusieurs éléments allongés dans cette structure. Un suivi du guidage et de l'introduction de ces fils de trame dans chaque voie du métier à tisser est également nécessaire pour déclencher l'arrêt du tissage. Néanmoins, un tel procédé autorise un positionnement très précis, puisqu'au fil près, d'un élément allongé dans la structure tissée sans affaiblir mécaniquement cette dernière.

L'élément allongé présente un axe principal s'étendant le long de sa dimension longitudinale et, à titre d'exemple, l'élément allongé est un fil plein, un fil métallique, un insert, une tige de rigidification, un tube, un tube pourvu d'au moins une membrane d'étanchéité transversale, un tube dont la paroi interne est taraudée et des combinaisons de ces éléments.

Avantageusement, cet élément allongé est de section transversale droite circulaire ou ovoïde.

Deux membranes d'étanchéité placées dans un tube peuvent permettre de définir un logement étanche pour protéger l'objet externe placé dans le tube, par exemple contre l'eau.

Lorsque l'élément allongé est un insert, ce dernier présente avantageusement un corps principal creux et une collerette placée à au moins une extrémité de ce corps en s'étendant vers l'extérieur. Lorsque l'insert comporte à ses extrémités libres de telles collerettes, ces dernières définissent avec la paroi externe de ce corps creux, un logement destiné à retenir la zone environnante de la structure tissée pour assurer ainsi un blocage en position de l'insert dans cette structure tissée. Les collerettes viennent alors prendre appui sur cette zone environnante de la structure tissée.

Par ailleurs, un élément allongé ayant la forme d'un tube peut recevoir un objet externe.

Lorsqu'en outre, au moins une partie de la paroi interne de ce tube est taraudée, cet objet externe peut avantageusement être verrouillé en position. Un tel objet externe peut alors être un insert, une attache ou encore un dispositif de mesure par exemple.

De manière avantageuse, cet objet externe peut alors comporter au moins une zone de friction, rainurée, filetée ou autre, sur au moins une partie de sa zone de raccordement destinée à être en contact avec la paroi interne du tube, cette zone de friction permettant d'éviter l'extraction de cet objet externe sous l'effet de la pression de fluide.

De préférence, cet élément allongé est séparable de sorte que traversant de part en part la structure tissée, il est, par exemple, possible d'éloigner l'une de l'autre deux parois de cette structure tissée reliée par un tel élément allongé.

A titre d'exemple, un tel élément allongé peut alors être utilisé pour maintenir la structure tissée compacte avant son utilisation finale.

A titre illustratif, un élément séparable est obtenu par assemblage d'un premier élément longitudinal, creux ou plein, et d'un second élément longitudinal creux ou présentant une cavité longitudinale pour recevoir au moins en partie ce premier élément, ce dernier étant mobile par rapport au second élément longitudinal et séparable de ce dernier. Alternativement, cet élément allongé peut encore être un fil ou un tube présentant au moins une zone fragile pour assurer sa séparation en un ou plusieurs morceaux prédéfinis lorsqu'une force de rupture est appliquée sur celles-ci. Cette zone fragile peut par exemple être formée par une ligne de moindre résistance. Dans le cas d'un tube allongé, celui-ci peut ainsi comporter un ensemble de trous d'amorce de rupture espacés les uns des autres et placés sur la périphérie de ce tube pour définir cette ligne de moindre résistance. Dans le cas d'un fil métallique, ce dernier peut ainsi comporter une rainure circulaire définissant une ligne de séparation.

Il est clair que la présente invention n'est pas limitée à un type de fil particulier mais que le terme "fil" doit être compris dans son acception la plus large dans le domaine textile.

A titre purement illustratif, les fils de chaîne et de trame mis en oeuvre pour la réalisation de cette structure tissée sont choisis dans le groupe comprenant des fils mono-filament, des fils multi-filaments, des fils plats, des fils formés de fibres maintenues ensemble par torsion, du fil simple ou rotor, des tresses de fils torsadés, des éléments multibrins souples, torsadés ou non, tels que des torons souples.

Ces fils constitutifs de la structure tissée peuvent être identiques ou au contraire, être différents pour au moins certains d'entre eux. Ils peuvent encore présenter des épaisseurs ou diamètres différents.

A titre d'exemple, ces fils peuvent être choisis dans le groupe comprenant des fils de matière organique telle que le coton, la laine, le lin, ou autre ; des fils synthétiques tels que polyester, polyamide, polypropylène, polyéthylène, polyaramide, ... ; des fils réalisés à base de matériaux plastiques biodégradables à base d'amidon ou de matériaux plastiques oxodégradables ; des fils de matière inorganique telle que le carbone, le graphite, le verre, l'amiante ou autre ; et des fils métalliques tels qu'en acier, aluminium, des alliages ou autres.

L'invention inclut la possibilité d'utiliser plusieurs matériaux différents dans la réalisation de cette structure tissée ou au contraire, de réaliser une structure tissée réalisée en une seule et même matière.

Dans le cas où cette structure tissée comporte une seule paroi ou dans le cas où chaque paroi de la structure tissée présente la même armure, le procédé de fabrication d'une structure tissée de la présente invention peut encore se définir comme suit :
Procédé de fabrication d'une structure tissée comportant au moins une paroi tissée dans lequel on réalise les étapes successives suivantes :
   a) tisser au moins une première portion de ladite structure tissée, ladite première portion comportant des fils de chaîne et des fils de trame entrecroisés selon une armure fondamentale,
   b) stopper l'introduction des fils de trame après insertion d'un fil de trame associé au positionnement d'au moins un élément allongé dans ladite structure tissée, ce fil de trame étant entrecroisé avec les fils de chaîne selon cette armure fondamentale,
   c) ledit au moins un élément allongé ayant un axe principal, introduire chaque élément allongé entre les fils de chaîne définissant avec ledit fil de trame associé, la position d'insertion de cet élément dans la structure tissée, l'axe principal dudit élément allongé coupant le plan passant par les fils de chaîne de chaque partie de paroi de cette première portion dans laquelle il est introduit,
   d) maintenir en position ledit au moins un élément allongé et introduire au moins un nouveau fil de trame entrecroisant les fils de chaîne de ladite structure tissée selon l'armure fondamentale ou selon une nouvelle armure, pour reprendre la fabrication de ladite structure tissée, chaque élément allongé étant non pris dans ladite structure tissée.

Autrement dit, ledit au moins un élément allongé est non lié par les opérations de tissage à ladite structure tissée mais peut être assemblé à celle-ci, ou encore rendu solidaire de celle-ci par une opération distincte du tissage, tel qu'un collage ou autre.

En ce sens, la réalisation de la structure tissée uniquement par tissage laisse libre chaque élément allongé dans cette structure tissée. Il est ainsi possible de les retirer, ou encore les extraire de celle-ci.

Dans différents modes de réalisation particuliers de ce procédé de tissage, chacun ayant ses avantages particuliers et susceptibles de nombreuses combinaisons techniques possible :
- à la fin de l'étape c), l'axe principal de chaque élément allongé est perpendiculaire, ou sensiblement perpendiculaire, au plan passant par les fils de chaîne de chaque partie de paroi dans laquelle il est introduit,
- plusieurs éléments allongés sont introduits le long d'un même fil de trame de la structure tissée.

Un seul élément allongé est introduit dans la structure tissée au point de coordonnées (x, y) dans un repère lié à une paroi de cette structure tissée. Alternativement, plusieurs éléments allongés sont introduits simultanément en un même point de la structure tissée.
- plusieurs éléments allongés étant introduits le long d'un même fil de chaîne, on répète les étapes b) à d).

Ces éléments allongés peuvent être espacés régulièrement les uns des autres ou non.

Ces éléments allongés peuvent encore être disposés pour former un ou plusieurs motifs tels qu'une étoile, un cercle, triangle, parallélépipède tel qu'un carré ou rectangle, en hélice lorsque la structure tissée présente une forme tridimensionnelle tubulaire.
- cette structure tissée comportant au moins deux parois tissées, ledit élément allongé ou au moins un desdits éléments allongés traverse au moins deux parois,
- ladite paroi tissée comportant au moins deux parois tissées et des éléments allongés étant introduits dans des parois distinctes, au moins certains de ces derniers sont placés en vis-à-vis,
- après l'étape d), on provoque un resserrement des fils de trame dans la structure tissée ainsi réalisée, ledit au moins un élément allongé étant ainsi emprisonné entre deux fils de trame consécutifs dans le sens de la longueur de la structure tissée,
- les parties de chaque élément allongé qui sont placées en saillie de ladite structure tissée sont coupées de sorte que les extrémités de chaque élément allongé ainsi raccourci sont placées en deçà de, ou affleurant avec la, surface externe correspondante de ladite structure tissée.

Dans le cas où ces extrémités sont affleurant, on dit encore qu'elles sont placées de niveau avec la surface externe correspondante de cette structure tissée. Préalablement à cette découpe, on peut fixer une couche de polymère sur au moins les deux faces externes de la structure tissée, par exemple par tout procédé de surmoulage de polymère (vulcanisation, enduction, ...).

La réalisation de telles couches de polymère offre à cette structure tissée, non seulement une meilleure étanchéité, mais également une plus grande résistance aux agressions extérieures telles que des objets susceptibles de couper et de détériorer cette structure.

De manière avantageuse, ce polymère est un élastomère.
- ledit ou au moins un desdits éléments allongés est assemblé à la structure tissée.

De préférence, ledit ou au moins un desdits éléments allongés est préalablement imprégné d'un adhésif ou d'une résine thermodurcissable pour assurer sa solidarisation à ladite structure tissée.

Alternativement ou en plus, on choisit ou on forme préalablement chaque élément allongé de sorte que sa surface externe présente un relief de surface pour assurer son maintien en position dans ladite structure tissée.
- aux étapes c) et d), on tend ledit au moins un élément allongé pour s'assurer que l'ensemble dudit élément allongé placé dans ladite structure est rectiligne.

En mettant sous tension l'élément allongé, on s'assure ainsi qu'il conserve sa géométrie. Par exemple, le canal intérieur d'un tube n'est pas accidentellement pincé, et par conséquent fermé.
- on forme une structure tissée tridimensionnelle d'une seule pièce.

Cette structure tissée est donc dépourvue d'éléments d'assemblage par exemple de points de couture, agrafes ou autre. A titre illustratif, une telle structure tissée est illustrée dans la demande de brevet WO2009095404 au nom de la présente demanderesse,
- réalisant une structure tissée ayant la forme d'un tube creux, des éléments allongés sont intégrés dans ladite structure tissée en étant alignés sur la périphérie dudit tube pour former au moins une ligne circonférentielle ou une hélice.

Ces éléments allongés peuvent former au moins deux lignes circonférentielles espacées l'une de l'autre pour permettre l'introduction d'un fil à l'intérieur du tube creux et sa sortie en un autre point. Le fil étant libre entre ces deux points, il peut avantageusement recevoir une pièce telle qu'un anneau rigide pour sa fixation.
- ledit élément allongé est un fil plein, un fil métallique, un insert, une tige de rigidification, un tube, un tube pourvu d'au moins une membrane d'étanchéité transversale, un tube dont la paroi interne est taraudée et des combinaisons de ces éléments.
- ledit élément allongé étant un tube, on introduit dans le canal intérieur dudit tube, soit préalablement, soit après introduction dudit tube dans ladite structure tissée lors de son tissage, un dispositif de mesure, un capteur pourvu d'un élément émetteur/récepteur, une électrode, un organe de fixation, un fil, un dispositif de stockage de données, un élément d'identification telle qu'une puce RFID, une unité électronique pour recevoir et traiter les données mesurées par d'autres capteurs, et des combinaisons de ces éléments.

A titre purement illustratif, il peut s'agir d'un capteur de pression, d'un capteur de température ou encore d'un capteur d'humidité. Par exemple, il peut s'agir d'un dispositif pour mesurer la température/humidité de la couche d'air située entre le corps de l'utilisateur et la surface interne d'un vêtement dans lequel sont intégrés un ou plusieurs tubes. Ces tubes peuvent encore recevoir des électrodes pour mesurer le rythme cardiaque d'un utilisateur, une unité électronique pour traiter des mesures,
- on introduit au moins certains fils conducteurs électriques et/ou fils conducteurs de lumière, tels que des fibres optiques, pour former les fils de chaîne et/ou de trame de manière à définir un circuit d'alimentation électrique et/ou un circuit de transmission de données dans ladite structure tissée.

Un tel circuit d'alimentation électrique étant relié à une source d'énergie externe, il est possible d'alimenter un élément externe rapporté dans un élément allongé.

A titre d'exemple, cet élément allongé étant un support conformé pour recevoir une source lumineuse telle qu'une ampoule, ce circuit d'alimentation électrique peut servir à alimenter cette source lumineuse.

Alternativement, cet élément allongé peut être conformé pour recevoir un dispositif optique tel qu'une caméra. Des fils conducteurs peuvent alors servir à alimenter en énergie ce dispositif optique et d'autre fils conducteurs sont utilisés pour transporter le signal mesuré vers une unité de stockage ou vers une unité d'analyse.

Bien entendu, ces fils conducteurs sont avantageusement isolés par une âme extérieure réalisée dans un matériau isolant souple.

La présente invention concerne aussi un vêtement intelligent dont au moins une partie de celui-ci est une structure tissée telle que décrite précédemment.

Ce vêtement intelligent peut être un vêtement de surveillance médicale d'un patient, comportant par exemple des capteurs biomédicaux et une source d'alimentation en énergie électrique reliée à ces capteurs par des fils conducteurs électriques.

De préférence, au moins certains desdits éléments allongés de cette structure tissée comportent un moyen d'ancrage d'un objet externe.

Cet élément allongé étant un tube, un tel moyen d'ancrage est par exemple une partie taraudée de la surface interne de ce tube.

En outre, un insert peut être rapporté et ancré dans un élément allongé, cet insert comportant à son extrémité libre une attache d'un objet externe. Cette attache peut par exemple être un anneau.

Cet objet externe peut être un porte-clés, un support pour une paire de menottes ou un appareil manuel de défense tel qu'un dispositif pour pulvériser un gaz tel qu'un gaz poivré. Un tel support est alors avantageusement ancré dans un ensemble de plusieurs éléments allongés.

Un tel vêtement trouve des applications dans le domaine militaire, la surveillance relative à la sécurité, les sports, ...

La présente invention concerne autant une cheminée ou conduit creux dont au moins une partie est une structure tissée telle que décrite précédemment.

Une telle cheminée ou conduit creux peut être utilisée dans diverses applications telles que le transport de fluide (gaz, liquide tel que de l'eau).

Les éléments allongés traversant la paroi de cette cheminée ou conduit, peuvent par exemple recevoir des capteurs de mesure (débit, pression, ...).

Pour rendre étanche ce conduit, il est possible de fixer une couche de polymère sur la surface externe et/ou la surface interne de ce conduit comme décrit plus haut. Ce polymère peut être un élastomère (Nitrile, ..), du polychlorure de vinyle (PVC), ...

La présente invention concerne également un dispositif pour l'élevage de coquillages tels que des huitres, comprenant au moins un élément formant plateau de support desdits coquillages destiné à être reçu à l'intérieur d'un filet de forme tubulaire.

Selon l'invention, une partie au moins de ce filet est formée par une structure tissée telle que décrite précédemment.

Un tel filet est bien entendu ajouré pour assurer la circulation de courants marins autour et dans le dispositif d'élevage.

A titre illustratif, cet élément formant plateau comporte une jupe périphérique s'étendant de manière perpendiculaire ou sensiblement perpendiculaire au plan du plateau, ce dispositif comportant des organes d'assemblage du filet avec cette jupe de sorte que ledit filet soit au moins en partie plaqué contre cette jupe.

De préférence, cet élément formant plateau comprend un support comportant une partie annulaire délimitant une ouverture dans la partie centrale de ce support et ladite jupe périphérique qui s'étend de manière perpendiculaire ou sensiblement perpendiculaire à partir de cette partie annulaire, et un plateau amovible destiné à reposer sur cette partie annulaire en recouvrant ladite ouverture.

Ce plateau amovible est ajouré pour permettre une bonne circulation de l'eau de mer.

Au moins l'extrémité supérieure de ce dispositif d'élevage comporte au moins une attache pour permettre de suspendre verticalement à une haussière amarrée en mer ce dispositif d'élevage.

De préférence, ce filet comporte des éléments allongés lesquels sont alignés ou sensiblement alignés sur la périphérie de celui-ci pour former une ou plusieurs lignes circonférentielles d'assemblage en regard de chacune desquelles est placée une jupe périphérique d'un élément formant plateau pour l'assemblage de cet élément formant plateau et dudit filet.

De préférence, cet assemblage est non permanent.

Bien que l'assemblage puisse être réalisé de diverses manières, par exemple par liaison avec du fil, les éléments allongés peuvent être des tubes dans lesquels sont introduits des attaches pour assurer l'assemblage de l'élément formant plateau et du filet.

A titre d'exemple, une telle attache comporte une partie ayant une forme arrondie pour venir épouser extérieurement et plaquer le filet contre la jupe périphérique de ce plateau et au moins un élément faisant saillie tel qu'un tenon, dont la longueur et le diamètre autorisent, une fois chaque tenon introduit dans un élément allongé correspondant, ici un tube, de traverser ce dernier et une ouverture de la jupe périphérique en vue de leur assemblage. L'extrémité de chaque tenon peut comporter un élément de retenu formant saillie du corps principal du tenon, cette extrémité étant fendue pour définir deux ailes mobiles l'une par rapport à l'autre. Ainsi ces ailes se rapprochent lors de l'introduction du tenon dans l'élément allongé et s'écartent en position de blocage après avoir traversé cet élément allongé et l'orifice correspondant de la jupe périphérique de l'élément formant plateau. Une force de traction exercée sur l'attache force les deux ailes à se rapprocher pour permettre le dégagement de l'attache de l'ensemble élément allongé/orifice de la jupe périphérique pour libérer le filet de l'élément formant plateau.

La présente invention concerne encore une machine pour la fabrication d'une structure tissée telle que décrite précédemment, cette machine comprenant une zone de tissage dans laquelle sont introduits dans au moins une voie, des fils de trame, chacun desdits fils de trame étant introduit entre au moins deux fils de chaîne par au moins un élément d'introduction de trame, des moyens pour porter sur ladite ou une desdites voies et déterminer la position desdits fils de chaîne par rapport audit fil de trame.

Selon l'invention, cette machine comporte au moins un dispositif de préhension d'un ou plusieurs éléments allongé set des moyens de déplacement de ce dispositif de préhension hors de et dans la zone de tissage pour amener et placer un ou plusieurs éléments allongés en position dans ladite structure tissée en cours de fabrication.

De manière avantageuse, ce dispositif de préhension est configuré pour permettre de varier l'angle d'inclinaison de l'axe principal de chaque élément allongé par rapport au plan passant par les fils de chaîne d'au moins une des voies.

De préférence, chaque élément allongé est introduit perpendiculairement ou sensiblement perpendiculairement par rapport audit plan.

Avantageusement, cette machine comporte un outil de coupe pour couper les parties des éléments allongés dépassant de ladite structure tissée en cours de fabrication.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement et de profil un dispositif pour l'élevage de coquillages selon un mode de réalisation particulier de la présente invention, le filet et les plateaux amovibles de ce dispositif d'élevage ont été omis par souci de clarté ;
- la Figure 2 est une vue partielle du dispositif pour l'élevage de coquillages de la figure 1, seul le filet ayant été omis par souci de clarté ;
- la Figure 3 est une vue en perspective d'un plateau amovible du dispositif pour l'élevage de coquillages de la figure 1 ;
- la Figure 4 est une vue élargie et partielle d'un des plateaux du dispositif pour l'élevage de coquillages montrant l'assemblage du support de plateau sur la structure du dispositif d'élevage de la figure 1 ;
- la Figure 5 est une vue en perspective du filet du dispositif pour l'élevage de coquillages de la figure 1 ;

### DESCRIPTION DETAILLEE DE MODE DE REALISATION DE L'INVENTION

Tout d'abord, on note que les figures ne sont pas à l'échelle.

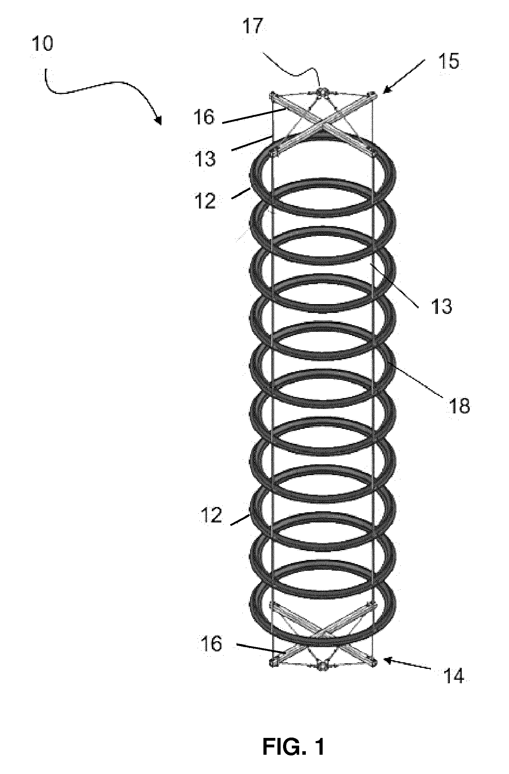

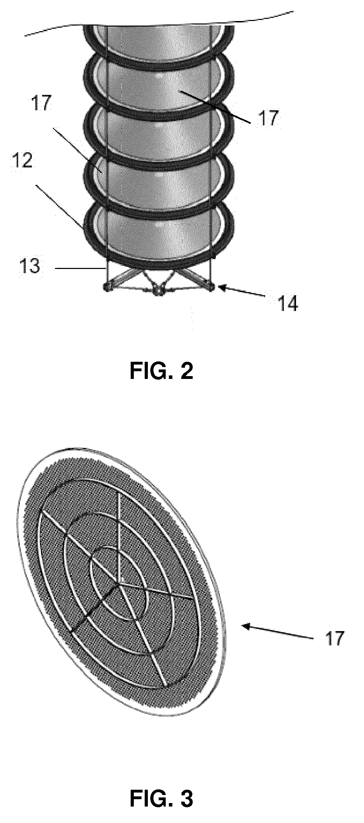

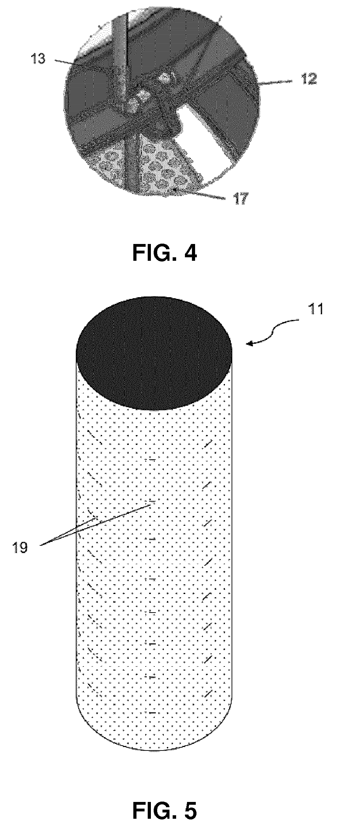

Les Figures 1 à 5 montrent de manière schématique un dispositif pour l'élevage de coquillages tels que des huitres, selon un mode de réalisation préféré de la présente invention.

Un tel dispositif 10 pour l'élevage de coquillages est destiné à être suspendu à une haussière immergée à faible profondeur en pleine mer en étant disposé verticalement.

Ce dispositif 10 comprend un filet 11 ayant une forme tubulaire et des éléments formant plateau coopérant avec ce filet 11 pour constituer des supports clos, régulièrement espacés le long de l'axe principal de ce dispositif 10 et s'étendant de manière perpendiculaire à ce dernier pour recevoir les coquillages à élever.

Chaque élément de plateau comporte un anneau 12 relié par des bouts 13 d'une part, aux anneaux 12 des autres éléments de plateau du dispositif d'élevage et d'autre part, à des éléments inférieur 14 et supérieur 15 de reprise des efforts.

Ces éléments 14, 15 de reprise des efforts du dispositif d'élevage sont ici constitués par des croix réalisées de préférence en acier inoxydable.

L'extrémité libre de chaque branche 16 d'un élément 14, 15 de reprise des efforts présente un orifice pour le passage d'un bout 13.

Ces bouts 13, au nombre ici de quatre (4) sont régulièrement répartis sur la périphérie du dispositif d'élevage. Ces bouts 13 sont assemblés ensemble par chacune de leurs extrémités grâce à des attaches 17 telles que des anneaux, assurant également la fixation du dispositif pour l'élevage de coquillages à la haussière dans sa partie supérieure d'une part, et à un lest dans sa partie inférieure d'autre part.

Entre les éléments 14, 15 de reprise des efforts, ces bouts 13 s'étendent de manière verticale en étant tendus et en étant assemblés à chaque anneau 12 des éléments formant plateau pour assurer leur solidarisation et maintien en position.

Chaque anneau 12 définit une partie centrale ouverte de l'élément formant plateau dans laquelle est placé un plateau 18 amovible. Ce plateau 18 amovible de diamètre extérieur inférieur à celui de l'anneau 12 est reçu dans un logement de ce plateau, ce logement étant défini par une rainure 18 circulaire intérieure.

Chaque plateau 18 amovible ainsi reçu dans son logement vient obturer l'ouverture délimitée par l'anneau 12 correspondant.

Chaque plateau 18 amovible est ajouré pour permettre une bonne circulation de l'eau de mer. Il peut être réalisé en matière plastique et comporter une ligne de pliage centrale pour faciliter la collecte des coquillages.

Un tel plateau 18 amovible autorise des opérations facilitées de vidage/rechargement des dispositifs pour l'élevage de coquillages car ces derniers peuvent rester en mer, seuls les plateaux amovibles étant retirés après retrait du filet 11.

Un tel filet 11 est bien entendu ajouré pour assurer la circulation de courants marins autour et dans le dispositif d'élevage.

On s'assure ainsi d'une exposition optimale des coquillages reposant sur l'élément formant plateau, à la circulation d'eau de mer ce qui favorise leur croissance tout en empêchant des pertes de coquillages en cours de croissance.

Ce filet 11 qui est souple de manière à pouvoir être remonté facilement dans la partie supérieure du dispositif pour accéder aux éléments formant plateau, comporte des tubes 19 introduits durant ce filet 11 durant son tissage.

Chaque tube 19 est avantageusement introduit dans la structure tissée du filet de manière perpendiculaire ou sensiblement perpendiculaire de sorte qu'il soit aisé d'assembler le filet 11 avec chaque élément formant plateau.

A titre d'exemple, ces tubes 19 peuvent être réalisés en acier inoxydable ou en matière plastique.

De plus, ces tubes 19 sont alignés ou sensiblement alignés sur la périphérie de ce filet 11 en définissant plusieurs lignes circonférentielles d'assemblage régulièrement espacées les unes des autres et perpendiculaires à l'axe principal du filet 11.

Chaque ligne circonférentielle d'assemblage est destinée à venir en regard d'un élément formant plateau en vue de l'assemblage de cet élément avec le filet 11 correspondant.

Un tel assemblage doit être facilement libérable de manière à faciliter les opérations de vidage et rechargement du dispositif pour l'élevage de coquillages.

Bien que l'assemblage puisse être réalisé de diverses manières, on met en oeuvre ici une attache (non représentée) comprenant une tige destinée à être introduite dans le canal intérieur d'un tube 19 et dont sa longueur lui permet de traverser ce tube 19, et par conséquent la paroi du filet 11 de sorte que son extrémité filetée soit assemblée dans un trou latéral taraudé d'un anneau 12. Cette attache comporte également une large tête pour sa manipulation par un opérateur et pour assurer un plaquage contre l'anneau 12 du filet 11.

## Revendications

1. Procédé de fabrication d'une structure tissée comportant au moins une paroi tissée, dans lequel on réalise les étapes suivantes :
a) tisser au moins une première portion de ladite structure tissée, ladite première portion comportant des fils de chaîne et des fils de trame entrecroisés selon l'armure fondamentale de chaque partie de paroi tissée correspondant à cette première portion,
b) stopper l'introduction des fils de trame après insertion d'un fil de trame associé au positionnement d'au moins un élément allongé (19) dans ladite structure tissée, ce fil de trame étant entrecroisé avec les fils de chaîne de chaque partie de paroi tissée selon l'armure fondamentale de ladite partie de paroi,
c) ledit au moins un élément allongé (19) ayant un axe principal, introduire chaque élément allongé (19) entre les fils de chaîne définissant avec ledit fil de trame associé, la position d'insertion de cet élément allongé (19) dans la structure tissée, l'axe principal dudit élément allongé (19) coupant le plan passant par les fils de chaîne de chaque partie de paroi dans laquelle il est introduit,
d) maintenir en position chaque élément allongé (19) et introduire au moins un nouveau fil de trame entrecroisant les fils de chaîne de ladite structure tissée selon ladite armure fondamentale de chaque partie de paroi ou selon au moins une nouvelle armure, pour reprendre la fabrication de ladite structure tissée, chaque élément allongé (19) étant non pris dans ladite structure tissée.

2. Procédé selon la revendication 1, **caractérisé en ce qu'**à la fin de l'étape c), l'axe principal de chaque élément allongé (19) est perpendiculaire, ou sensiblement perpendiculaire, au plan passant par les fils de chaîne de chaque partie de paroi dans laquelle il est introduit.

3. Procédé selon la revendication 1 ou 2, **caractérisé en ce que** plusieurs éléments allongés sont introduits le long d'un même fil de trame de la structure tissée.

4. Procédé selon l'une quelconque des revendications 1 à 3, **caractérisé en ce que** plusieurs éléments allongés étant introduits le long d'un même fil de chaîne, on répète les étapes b) à d).

5. Procédé selon l'une quelconque des revendications 1 à 4, **caractérisé en ce que** ladite structure tissée comportant au moins deux parois tissées, ledit élément allongé (19) ou au moins un desdits éléments allongés traverse au moins deux parois.

6. Procédé selon l'une quelconque des revendications 1 à 5, **caractérisé en ce que** ladite paroi tissée comportant au moins deux parois tissées et des éléments allongés étant introduits dans des parois distinctes, au moins certains de ces derniers sont placés en vis-à-vis.

7. Procédé selon l'une quelconque des revendications 1 à 6, **caractérisé en ce qu'**après l'étape d), on provoque un resserrement des fils de trame dans la structure tissée ainsi réalisée, ledit au moins un élément allongé (19) étant ainsi emprisonné entre deux fils de trame consécutifs dans le sens de la longueur de la structure tissée.

8. Procédé selon l'une quelconque des revendications 1 à 7, **caractérisé en ce que** les parties de chaque élément allongé (19) qui sont placées en saillie de ladite structure tissée sont coupées de sorte que les extrémités de chaque élément allongé (19) ainsi raccourci sont placées en deçà de, ou affleurant avec la, surface externe correspondante de ladite structure tissée.

9. Procédé selon l'une quelconque des revendications 1 à 8, **caractérisé en ce que** ledit ou au moins un desdits éléments allongés est assemblé à la structure tissée.

10. Procédé selon la revendication 9, **caractérisé en ce que** ledit ou au moins un desdits éléments allongés est préalablement imprégné d'un adhésif ou d'une résine thermodurcissable pour assurer sa solidarisation à ladite structure tissée.

11. Procédé selon la revendication 9 ou 10, **caractérisé en ce qu'**on choisit ou on forme préalablement chaque élément allongé (19) de sorte que sa surface externe présente un relief de surface pour assurer son maintien en position dans ladite structure tissée.

12. Procédé selon l'une quelconque des revendications 1 à 11, **caractérisé en ce qu'**aux étapes c) et d), on tend ledit au moins un élément allongé (19) pour s'assurer que l'ensemble dudit élément allongé (19) placé dans ladite structure est rectiligne.

13. Procédé selon l'une quelconque des revendications 1 à 12, **caractérisé en ce qu'**on forme une structure tissée tridimensionnelle d'une seule pièce.

14. Procédé selon l'une quelconque des revendications 1 à 13, **caractérisé en ce que** réalisant une structure tissée ayant la forme d'un tube creux, des éléments allongés sont intégrés dans ladite structure tissée en étant alignés sur la périphérie dudit tube pour former au moins une ligne circonférentielle ou une hélice.

15. Procédé selon l'une quelconque des revendications 1 à 14, **caractérisé en ce que** ledit élément allongé (19) est un fil plein, un fil métallique, un insert, une tige de rigidification, un tube, un tube pourvu d'au moins une membrane d'étanchéité transversale, un tube dont la paroi interne est taraudée et des combinaisons de ces éléments

16. Procédé selon l'une quelconque des revendications 1 à 15, **caractérisé en ce que** ledit élément allongé (19) étant un tube, on introduit dans le canal intérieur dudit tube, soit préalablement, soit après introduction dudit tube dans ladite structure tissée lors de son tissage, un dispositif de mesure, un capteur pourvu d'un élément émetteur/récepteur, une électrode, un organe de fixation, un fil, un dispositif de stockage de données, un élément d'identification telle qu'une puce RFID, une unité électronique pour recevoir et traiter les données mesurées par d'autres capteurs, et des combinaisons de ces éléments.

17. Procédé selon l'une quelconque des revendications 1 à 16, **caractérisé en ce qu'**on introduit au moins certains fils conducteurs électriques et/ou fils conducteurs de lumière pour former les fils de chaîne et/ou de trame de manière à définir un circuit d'alimentation électrique et/ou un circuit de transmission de données dans ladite structure tissée.

18. Vêtement intelligent dont au moins une partie est une structure tissée selon l'une quelconque des revendications 1 à 17.

19. Cheminée ou conduit creux dont au moins une partie est constituée par une structure tissée selon l'une quelconque des revendications 1 à 17.

20. Dispositif (10) pour l'élevage de coquillages tels que des huitres, comprenant au moins un élément (18) formant plateau de support desdits coquillages destiné à être reçu à l'intérieur d'un filet (11) de forme tubulaire, **caractérisé en ce qu'**une partie au moins dudit filet (11) est formée par une structure tissée selon l'une quelconque des revendications 1 à 17.

21. Machine pour la fabrication d'une structure tissée selon l'une quelconque des revendications 1 à 17, comprenant une zone de tissage dans laquelle sont introduits dans au moins une voie, des fils de trame, chacun desdits fils de trame étant introduit entre au moins deux fils de chaîne par au moins un élément d'introduction de trame, des moyens pour porter sur ladite ou une desdites voies et déterminer la position desdits fils de chaîne par rapport audit fil de trame, **caractérisée en ce qu'**elle comporte au moins un dispositif de préhension d'un ou plusieurs éléments allongé set des moyens de déplacement de ce dispositif de préhension hors de et dans la zone de tissage pour amener et placer un ou plusieurs éléments allongés en position dans ladite structure tissée en cours de fabrication.

22. Machine selon la revendication 21, **caractérisée en ce que** ledit dispositif de préhension est configuré pour permettre de varier l'angle d'inclinaison de l'axe principal de chaque élément allongé (19) par rapport au plan passant par les fils de chaîne d'au moins une des voies.
